# EUROPEAN PATENT APPLICATION

(11) **EP 1 367 487 A1**
(43) Date of publication of application: **03.12.2003**
(21) Application number: 02292415.3
(22) Date of filing: 01.10.2002
(51) Int. Cl.: G06F 9/445

(54) **Remote application correction**

(30) Priority: 30.05.2002 EP 02077117
(71) Applicant: Schlumberger Systèmes, 92120 Montrouge (FR)
(72) Inventor: Hamichi, Farid, c/o Schlumberger Systèmes, 92542 Montrouge cedex (FR)

(57) **Abstract**

A method for updating an application stored in a memory of a data processing system, characterized in that it comprises the following steps:
- Before performing data correction, an application checks whether a file is present on the data processing system,
- If such a file is present, the generic application modifies the application on the basis of the data stored in the said file.

## Description

### Technical field

This invention concerns a method to correct data remotely. Generally, data can be stored in a data processing system. The example chosen to illustrate the invention is that of the smartcard, particularly a SIM card, coupled to a Portable object (Mobile phone, PDA, etc.).

### Prior art

GSM SIM Card manufacturers face a big issue when they have to deal with defect corrections on cards that are already on the field. They provide from thousands up to millions of card to Telecommunications operators. On the top of these cards, they also provide various kind of applications with various level of complexity.

Sometimes even after a long integration and validation phase, a problem is discovered on some of these applications when they are already on the field, meaning that many people do own already the cards.

A correction of these defects is very painful for the Telecommunication operators and Card manufacturer industry. Because they have to deal with a huge number of cards, it will always cost a lot of money to get the correction to be done, even if the problem is not a big deal. And in many situations, the cost is so prohibitive that no correction can be done.

The major goal of the invention is to give an answer to these quality issues by providing a special application that will be able to allow a remote correction. The cards will neither be retrieved from the field nor replaced. This will ease the pain for Card manufacturer and decreased significantly the cost of a correction. This can lead also to new business proposals regarding maintenance system.

This invention can also be used in all the smart card industry and not only the GSM industry. That means for all other smart cards product with an Over The Air system or any smart card product with a remote system management.

A smart card is based on a chip. In the heart of this chip -ROM-, Card manufacturers put their operating system called hardmask, and load their applications on the top of it -EEPROM- . These applications can be a mix of softmask and applets. Once the applications are loaded on the card and when the personalization is done, the card is locked. At that time no more softmask applications can be downloaded, for Java cards it is possible to download another applet but the previous one has to be deleted.

At this stage, cards are released on the field and no further correction can be done. Only card file system management is possible with the Over The Air services.

With these services, Telecommunication operators can modify and update files dedicated to GSM and telecommunications with SMS services.

### 3 Summary of the Invention

The goal of the invention is to achieve a generic application remote bug correction system with these constraints (locked cards, Over The Air services) taken into account.

The invention includes the following steps:
- Before performing data correction, a specific application checks whether a file is present on the data processing system,
- If such a file is present, the specific application modifies the application on the basis of the data stored in the said file.

The invention is based on specific application which is a generic softmask application. This softmask will depend on the hardmask (because it will refer to the memory mapping done by the product line group when the hardmask is implemented).

This softmask can also be implemented on the hardmask side and become a product feature that may or may not be activated.

This softmask will be part of any new applications that will be released ( it can also be an option chosen by the customer as a guarantee to solve unknown problems that may occur after the global application validation ).

With this softmask -depending on the complexity level of the modification and the available size on the card- it will be possible to modify, to change the behaviour of an application that is already on the field. The modification will be transparent to the end-user. And it will be very easy for any Telecommunication operators to do it.

It means when a problem is discovered on the field with the cards. After an analysis of the problem by the card manufacturer, a feasibility study of the defect fixing, it will be possible for example to say if the problem can be corrected remotely. If it is, fixing configuration data can be provided by the card manufacturer to the Telecommunication operators, and they can be sent to the cards with, for example, a basic Over The Air service.

If it is not, no defect fixing will be done remotely.

This softmask is by itself a value-added service.

### Drawings:

Fig 1A to 1B are schematic views of the process illustrating the invention. Figr.1A is behaviour of the application before the remote correction. Figure 1B illustrates modification of the application thanks to the fixing configuration data file. Fig 1C illustrates the behaviour of the application after the remote correction
Fig 2 is an algorithm constituting another way for illustrating the invention

### 4-Detailed description of Invention including examples

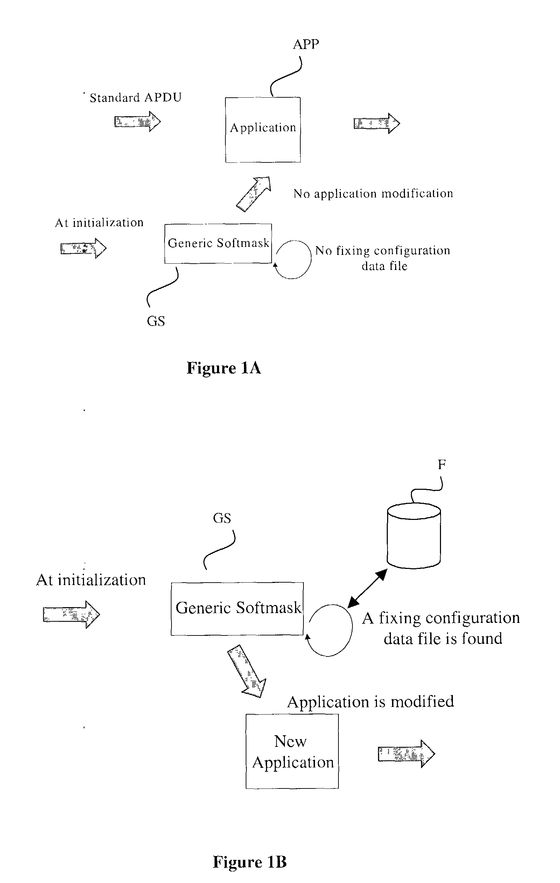

In our example, in reference to figure 1A, the softmask GS will be run in the initialisation phase of the card. Preferably,, the generic softmask GS will be totally executed once and only once. The execution will happen only if fixing configuration data included in a file F are downloaded stored on the card (see figure 1B), if not the execution will not be performed (see figure 1A). In our example, the application APP is stored on a card (not shown) coupled to an handset (not shown).

In our illustrated example, somewhere under a dedicated file or the master file, a File F with a specific ID (the ID can be chosen at the personalization or be set during the project life, depending on the requirements or the evolution of the project) and with specific format will contain the fixing configuration data. This file can be created at any time during the card life, i.e. during the personalisation or better while the card is on the field. Since it is a file, this can be done easily thanks to current Over The Air (OTA) services.

This file F will contain data formatted in a way, that it will be interpreted correctly by the softmask. And automatically, the application with the previous behaviour will be replaced with the new behaviour described in this specific file.

In our example, the system uses the current SIM remote administrative tools.

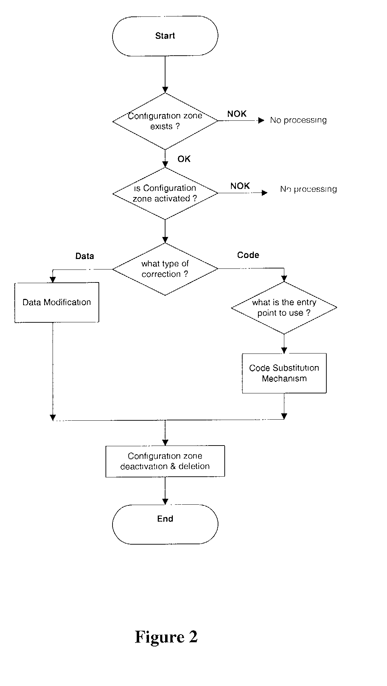

Figure 2 is an algorithm including different steps illustrating the invention.

Considering that APDU command has been modified in the softmask and that the customer would like to change slightly the behaviour of this command (perform a supplementary check) -this can be seen as a change in requirements-, considering this addition is feasible. A new softmask will be developed, but this time the new softmask (after being fully tested) will be reshaped into a fixing configuration data file F. The application will be tested with this configuration data file.

Now the fixing configuration data file is created and downloaded Over The Air. In our example, Once the download is performed, next time the handset will be switched on, the modification will be taken into account.

The steps of the invention can be illustrated as follow:
**Step 1**
   The handset is switched on.
**Step 2**
   The generic softmask GS checks whether a file F with a specific ID is stored in the card. If yes, step 3 is performed; if not, the correction is not performed.
**Step 3**
   The generic softmask GS checks whether this file F is activated. If yes, the generic softmask GS (step 4) is performed; if not, the correction is not performed.
**Step 4**
   The generic softmask GS checks the type of the correction. If the correction consists in data modification, it performs step 5; if it consists in a code substitution mechanism, it performs steps 6&7.
**Step 5**
   Data are modified.
**Step 6**
   The generic softmask GS search for the entry point to use in the fixing configuration file F.
**Step 7**
   Data are substituted.
**Step 8**
   After performing the correction, the generic softmask GS deactivates and deletes the configuration file F.
**Step 9**
   The correction process is finished.
   The Generic softmask GS can be run, for example, at:
   i) Card initialisation
   ii) Successful reception of a SMS (protected with a 03.48 security layer & end-to-end encryption)
   iii) Update of configuration zone, etc.

In our illustrated example (Figures 1A&1B), we have chosen the card initialisation for performing the generic softmask GS.

Generic softmask GS knows the zone exists if it finds the header of the zone in the EEPROM memory, and knows the zone is activated for example if in its header an activated parameter is set.

In our example, two type of correction can be done: data or code correction. A data correction means application data have to be changed but not the application itself. A code correction means the current code of the application has to be modified.

More specifically, for a data modification, in the configuration zone, the exact address in the eeprom, the new content and its size have to be stored. With these parameters the Generic softmask GS proceed to the modification.

For a code modification, in the configuration zone, the address of the previous code in the eeprom (entry point), the new code content and its size have to be stored. First of all, the Generic softmask deactivates the previous code and then proceed to the code substitution.

### Configuration zone Description

A Configuration zone could be a file formatted as an EEPROM area non directly reachable (like a Schlumberger key set).

In our example, this configuration zones comprises
- A header called configuration zone header including a standard header zone and a security parameter zone;
- And a configuration body zone which contains specific data such as number of corrections, type of correction, and for each correction the data associated.

Finally, the invention allows a remote modification of applications, in particular correction of errors. The smart card does not have to be physically returned to a center for making the modification correction.

### Note:

In the following document the following acronyms has been used:
- GSM: Global System for Mobile Communication;
- SIM: Subscriber Identity Module;
- ROM: Read Only Memory;
- EEPROM: Electrically Erasable programmable Read Only Memory;
- SMS: Short Message Service;
- ID: Identifier;
- APDU: Application Protocol Data Unit.

## Claims

1. A method for updating an application (APP) stored in a memory of a data processing system, **characterized in that** it comprises the following steps:
- Before performing data correction, a specific application (GS) checks whether a file (F) is present on the data processing system,
- If such a file (F) is present, the specific application modifies the application (APP) on the basis of the data stored in the file (F).

2. The method according to claim 1, **characterized in that**, when the specific application (GS) modifies an application (APP) on the basis of the data stores in the file (F), the specific application (GS) writes the new code or data and deactivates the previous one.

3. The method according to claim 1, **characterized in that** the file (F) is downloaded in the data processing.

4. The method according to claim 1, **characterized in that** the file (F) has a predetermined identifier (ID), and **in that** the specific application (GS) searches for this identifier (ID) for performing a modification of the application (APP).

5. The method according to claim 4, **characterized in that**, after the specific application (GS) has found the identifier (ID), the specific application checks whether the file (F) is activated or deactivated; if the file is activated, the application performs the modification; if the file is deactivated, the application doesn't perform the modification.

6. The method according to claim 1, **characterized in that** the data processing system is a smartcard coupled to a portable object, and **in that** the memory is included in the smartcard.
